# EUROPEAN PATENT APPLICATION

(11) **EP 3 628 836 A1**
(43) Date of publication of application: **01.04.2020**
(21) Application number: 18197411.4
(22) Date of filing: 28.09.2018
(51) Int. Cl.: F01N 13/00, F01N 13/10, F01N 3/10, F01N 3/20, F01N 3/28

(54) **EXHAUST HOUSING FOR AN INTERNAL COMBUSTION ENGINE AND METHOD OF GUIDING EXHAUST GAS OF THE INTERNAL COMBUSTION ENGINE**

(71) Applicant: Winterthur Gas & Diesel Ltd., 8401 Winterthur (CH)
(72) Inventor: Brutsche, Martin, 8418 Schlatt (CH); Cakir, Ertugrul, 8800 Thalwil (CH)
(74) Representative: Hepp Wenger Ryffel AG

(57) **Abstract**

It is suggested to provide an exhaust housing (1) for an internal combustion engine. The exhaust housing comprises an exhaust manifold (20) and a first exhaust treatment area (30). The exhaust manifold (20) includes at least one exhaust housing inlet (2) for exhaust gas of the internal combustion engine and at least one manifold outlet for guiding the exhaust gas to the exhaust treatment area. The first exhaust gas treatment area comprises a first duct (5) and a second duct (6) that are arranged in parallel. A first exhaust treatment section (7) is arranged in the first duct (5) and a second exhaust treatment section (8) is arranged in the second duct (6). The invention is characterized in that the first duct comprises a primary flow constriction, such that a flow distribution of the first and second duct is optimized.

## Description

The present invention relates to an exhaust housing for an internal combustion engine and a method of guiding exhaust gas of an internal combustion engine according to the preamble of the independent claims.

The invention generally relates to the technical field of treating exhaust gases of internal combustion engines. Examples of such combustion engines are large vessel engines such as used in marine environments. However, the invention might also be used in combination with energy plants.

It is known to employ selective catalytic reactions (SCR) to reduce the emissions (e.g. nitrogen emissions). For this purpose, catalytic elements are arranged in an exhaust manifold and the exhaust gas is guided through the catalytic elements.

DE 10 2016 205 299 A1 shows an internal combustion engine with an exhaust treatment system. The exhaust gas of multiple cylinders is collected in a mixing pipe, which guides the exhaust gas to the treatment system. At an outflow of the mixing pipe, a flow of the exhaust gas is redirected by about 180° and after the redirection led through an SCR catalyst. The arrangement shown in DE 10 2016 205 299 leads to a disadvantageous use of space. The proposed arrangement is complicated and thus costly and complex.

EP 3 050 615 A1 shows a flow unit for cleaning of an exhaust gas. The flow unit comprises a guiding surface and a break surface. In one embodiment, EP 3 050 615 A1 shows a flow element, which can be arranged in the exhaust system (Fig. 8).

The object of the invention is to improve an efficiency of an exhaust treatment area. Optionally a life span of the catalytic elements may be improved. One particular problem of the invention is to improve a distribution of exhaust gas between different catalytic elements.

It is suggested to provide an exhaust housing for an internal combustion engine. The housing has at least one housing inlet for an exhaust gas of the internal combustion engine and at least one housing outlet for the exhaust gas. The housing comprises an exhaust manifold and a first exhaust treatment area. The exhaust manifold includes the at least one housing inlet and at least one manifold outlet for guiding the exhaust gas to the first exhaust treatment area. The first exhaust gas treatment area comprises a first and a second duct. A first exhaust treatment section is arranged in the first duct and a second exhaust treatment section is arranged in the second duct. The first exhaust gas treatment area further comprises a bifurcation for splitting the exhaust gas into a first part for the first duct and a second part for the second duct. The bifurcation is arranged upstream of the first and second duct.

An exhaust housing according to this invention can be any housing in which exhaust is collected or flowing.

The invention is characterized in that the first duct comprises a primary flow constriction, such that a flow distribution of the first and second duct is optimized.

Under normal operating conditions, without a flow constriction, a flow into one of the exhaust treatment sections may be larger than into the other. This leads in particular in asymmetric exhaust housings to a shortened lifetime of particular catalytic sections.

As a result of the flow constriction, a flow into the first exhaust treatment section is decreased while a flow into the second exhaust treatment section is increased. Thereby, the flow distribution between the first and second exhaust treatment sections can be optimized. For example, in one embodiment, the flow constriction may be arranged such that a flow into the first and second catalytic section is substantially equal.

One or all of the exhaust treatment section(s) may be a catalytic section. A catalytic section comprises a catalyst for a selective catalytic reaction (SCR). In alternative embodiments, the exhaust treatment sections may treat the exhaust gas in a selective non-catalytic reaction (SNCR). The catalytic section may comprise one or more layers. The layers may be standard and individually replaceable components.

The first and the second duct may be arranged in parallel. "In parallel" is understood as separating the exhaust gas into two streams. In particular embodiments, the first duct and the second duct guide a fluid at least partially substantially along the same direction. In other embodiments, the first and second ducts guide the fluid in opposing directions.

The exhaust gas treatment area may include a separation region or a division part or a furcation for separating the exhaust gas into the first part for the first duct and the second part for the second duct.

The bifurcation may separate the exhaust gas into two, three, or more parts. The first and the second duct a preferably adapted to guide the exhaust gas separately.

In a preferred embodiment, an inlet of the second duct is arranged upstream of an inlet of the first duct. In such exhaust housings, guiding the flow distribution is particularly advantageous because the flow tends to concentrate in the downstream ducts. In these ducts the catalytic elements deplete faster due to the larger flow velocity.

In one embodiment, the exhaust first and second duct may be formed as a Z-type or U-Type manifold. The first and second duct may merge at their respective ends. Alternatively, the first and second duct may lead to separate exhaust housing outlets.

The flow constriction may be arranged at an inlet of the first duct, along the first duct or at an outlet of the first duct. In a preferred embodiment, the flow constriction is arranged at an inlet of the first duct. As a result of a pressure drop after the flow constriction, a pressure in the first exhaust treatment section is lower.

In a preferred embodiment, the exhaust manifold may additionally comprise a bypass. The bypass may be opened and closed with one or more bypass valves. The bypass valves may be arranged at an outlet of the exhaust manifold. The bypass bypasses the exhaust treatment sections. Thereby, the exhaust gas is directly guided from the exhaust manifold inlet to the exhaust housing outlet. This allows an energy saving configuration of the exhaust manifold.

A controller might be configured to control the valves such that in a first valve configuration the exhaust gas is guided through the first and second exhaust treatment sections and in a second valve configuration the exhaust gas is guided through the bypass.

The first and/or second duct may comprise a duct outlet valve. Thereby, only selected ducts may be operated. For example, if the catalytic elements in one of the catalytic sections are defective, the duct comprising this catalytic section may be closed.

Preferably at least one duct outlet valve is a non-return valve, preferably comprising non-return-flaps. Non return valves, in particular valves with non-return flaps, generally are cost effective and only need low maintenance.

The non-return valve may be a passive valve, which does not need to be activated by an external force.

A sensor may be arranged close to the non-return valve for measuring the opening degree and for determining the flow velocity and preferably the mass flow of the exhaust gas.

Preferably at least one reactor inlet valve and/or at least one duct outlet valve is a flow-control valve and/or comprises a valve spring with a certain return force.

By setting off the flow-control valve the overall flow within the treatment area may be influenced. If for example due to spatial conditions more gas would flow through a first SCR reactor, the respective flow control valve may be set to let through less gas. Hence, a uniform flow distribution may be achieved.

Additionally or alternatively the return force of a spring valve may be chosen to compensate for the external flow conditions.

The exhaust housing may also comprise a measuring unit for determining the opening degree of at least one of the valves.

The valves used in the exhaust housing as described above may comprise a frame at least having a first and a second side element. The valve may comprise at least one flap having a flap rotary axis, the at least one flap being arranged inside the frame. The valve may comprise an activation element for turning the at least one flap at least partially around a flap rotary axis. The activation element may be arranged outside the frame and at a distance D from the first side element such that a structural element of the exhaust path is arrangeable between activation element and side element.

By arranging the activation element outside of the exhaust housing, the activation element is not in contact with any exhaust and therefore the valve is durable. Furthermore, the cross section of the valve is maximized due to the activation element not taking any place inside the exhaust housing. Furthermore, the flap rotary axis is easily fixed in the frame and the structural element is furthermore easily connected to the flap rotary axis such that the complete valve is securely positioned and easily activatable inside an exhaust housing. The distance D is defined as the distance between the outer edge of the side element and an activation element or a linkage.

The distance D can be in a range between 30 mm to 300 mm, in particular 50 mm to 100 mm, preferably substantially 70 mm.

In this distance a structural element of the exhaust path is arrangeable between activation and side element.

The flap rotary axis can be arranged essentially in the middle of the flap and extend a longer longitudinal axis of the flap.

This way the torque is reduced and the flap can easily be turned.

The valve can comprise at least two, preferably three, more preferably four, in particular six, flaps. It is further conceivable to have more than six flaps.

This leads to an optimal distribution of opening cross section and torque on a flap rotary axis.

The flap rotary axis can have a length LR which corresponds to at least 105%, preferably at least 110%, more preferably at least 120% of the lengths of the flap FL.

This enables the connection of a structural element of the exhaust housing and an activation element to turn the flaps without losing cross section for exhaust inside the valve.

The flap rotary axis can comprise two parts, which preferably are connectable to each other wherein a first part essentially is arranged inside the frame and a second part essentially is arranged outside the frame and preferably connected to the activation element.

This design enables an easy installation of the valve since the first part of the valve can be positioned inside the exhaust housing comprising the first part of the flap rotary axis and afterwards the second part of the flap rotary axis can be connected to the first part of the flap rotary axis when the first part of the flap rotary axis is already installed in the exhaust housing. This leads to significantly reduced installation costs.

The connection between the first part and the second part of the flap rotary axis can be a hex key connection.

By using a hex key connection the rotary movement of the flap rotary axis is reliably transferred from the second part to the first part of the flap rotary axis and furthermore the installation of the complete flap rotary axis is extremely easy. Furthermore any angular deviations of the second part relative to the first part, for example by thermal expansion, can be easily compensated since the hex key connection allows for angular deviations.

As a matter of course similar connections like hex key connections such as square keys, octagonal keys or triangular keys can be used to connect the first part and the second part of the flap rotary axis.

The lengths of the first part of the flap rotary axis can be longer than the lengths of the second part of the flap rotary axis.

This enables an easy installation and simultaneously a stable flap rotary axis.

The flap rotary axis can be arranged in bearings in the side elements, preferably in a ceramics slide bearing and/or a graphite slide bearing.

A bearing in the side elements leads to a secure guiding of the turning movement of the flap rotary axis.

Ceramic or graphite bearings have a high durability even in the challenging exhaust surroundings of an exhaust housing, in particular in temperatures above 500°C.

The flap rotary axis can be arranged in at least one additional bearing inside the frame in between the side elements, preferably in a ceramics slide bearing and/or a graphite slide bearing.

For this purpose the frame additionally comprises a middle element being arranged substantially in parallel to the side elements which comprises the at least one bearing. As a matter of course there can be more than one middle element arranged inside the frame in case more stability of the flap rotary axis is needed.

The frame preferably comprises a top and a bottom element to increase the stability of the valve.

In particular exhaust housing as described above may comprise a valve section and at least one valve as previously described.

The valve section of an exhaust housing is a section in which a valve can be positioned. The valve section comprises a structural element, in which the rotary axis can be arranged and which comprises enough stability such that the flap rotary axis can be turned in a stable way. The structural element therefore at least has a width of 50 mm such that a rotary axis having a diameter of 25 mm can be securely positioned in the structural element.

The valve section can be a structural plate of the exhaust housing.

This way the structural plate can be simultaneously used as connection point for the flap rotation axis.

The activation elements can be arranged outside the exhaust housing.

This way the activation elements are not in contact with exhaust and therefore more durable.

The valve can be arranged in the high pressure area of the engine and particular upstream of an SCR reactor.

In this high demanding surrounding of the exhaust housing the valve can optimally fulfill its function and is still very durable.

The activation elements can be electrical motors.

Electrical motors are easily controlled and easily exchanged. Furthermore, they are comparably cheap and can be bought as standard parts.

The structural element can comprise four openings, each opening accommodates one flap rotary axis.

This leads to a possibility to place a valve with four flaps in the exhaust housing.

The exhaust housing can comprise three or more valves, in particular seven valves.

This leads to the possibility to direct exhaust to one or two exhaust treatment devices or to direct the exhaust directly to the outlet of the exhaust housing. After the outlet, the exhaust is preferably directed to a turbocharger.

Further, the exhaust manifold may comprise a controller configured to close the duct outlet valves, when the bypass is opened. Thereby, a backflow into the first and/or second duct when the bypass is opened may be prevented.

The exhaust manifold may comprise a manifold outlet valve. The manifold outlet valve may be arranged such that a flow into the exhaust gas treatment area or one of or both of the first and second ducts can be blocked when the manifold outlet valve is closed. Alternatively, the first and/or second duct may comprise individual inlet valves.

In one embodiment, the exhaust manifold comprises multiple inlets. The exhaust manifold may also comprise multiple outlets. In a preferred embodiment, the exhaust manifold comprises at least one inlet for each cylinder of the internal combustion engine.

The exhaust gas treatment area may comprise an exhaust gas collection chamber downstream of the first and second duct. The first and second duct may guide the exhaust gas to the gas collection chamber. The at least one exhaust manifold outlet may be arranged in the exhaust gas collection chamber. The exhaust gas collection chamber allows a mixing of the exhaust gas after the treatment of the exhaust gas.

Each catalytic section may comprise at least one catalytic element. The catalytic elements may be replaceable. The catalytic sections and/or the catalytic elements may be standard components and/or may have equal sizes. Thereby, a replacement of single catalytic sections and/or catalytic elements is particularly simple. The catalytic elements may be catalytic layers.

In one embodiment the first and second catalytic section may comprise two or three or more catalytic elements. Preferably both catalytic sections comprise two or three or more catalytic elements.

In one embodiment, the flow constriction is formed by at least one of: a baffle plate, a perforated plate, a valve, in particular a plate valve, one or more flaps and a constriction of a cross-section of the first duct. In one embodiment, the flow constriction is formed by a plate, which covers a part of the cross-section of the first duct.

The perforated plate is a preferred embodiment. A perforated plate is particularly simple and easy to make. Further, a retrofitting, i.e. adding a perforated plate to existing exhaust manifolds, is particularly simple.

As used herein, a perforated plate is a plate with one or more perforations through which a fluid can flow. The perforations may be circular, elliptical, squares, triangles, or any other suitable shape. In a preferred embodiment the perforations are regular and evenly distributed over the perforated plate. In one embodiment the perforations may be formed by elongated slits. In an alternative embodiment the perforated plate may comprise only one hole.

In one embodiment, the flow constriction is adjustable. Thereby, the flow constriction can be adjusted to the current fluid stream and balance the stream at any throughput. The flow constriction may in particular be a variable perforated plate.

The perforated plate may be variable for example by arranging two perforated plates above one another. One of the perforated plates may be moved relatively to the other to close some or all of the perforations. The perforated plate may be actuated actively, for example by a motor. Alternatively, the perforated plate may be actuated passively, for example by connecting to perforated plates with springs. Thereby, the perforated plate opens further, if a pressure increases.

As used herein, a baffle plate is a plate used to redirect a direction of a flow of a fluid.

In one embodiment, the flow constriction is designed such that turbulences are introduced. Turbulences may be introduced by varying the size of the perforations in relation to the cross-section of the first duct. Preferred ratios between a cross-section of the first duct immediately before the constriction and at the flow constriction are between 5% and 60%, further preferred between 10% and 40%.

A size of the flow constriction (i.e. an area of a smallest flow cross-section) may also be chosen in relation to a mass flow through the exhaust gas manifold. The exhaust housing may comprise an interface to receive information regarding the mass flow of exhaust gas from the engine. Additionally or alternatively the exhaust manifold may comprise a flow sensor. The flow sensor may be positioned at the exhaust manifold inlets and/or in one or more or all of the ducts. According to this information the flow constriction may be adjusted.

In one embodiment the flow constriction is a perforated plate which is arranged perpendicular to an intended flow direction. This is a particularly simple arrangement for the primary flow constriction.

The first exhaust treatment section may have a first capacity and the second exhaust treatment section may have a second capacity. The flow constriction may be designed such that a ratio of a volume stream through the first duct divided by a volume stream through the second duct corresponds to a ratio of the capacities of the catalytic section. Thereby, each exhaust treatment section is depleted at the same rate. Preferably, the first and second catalytic sections have the same capacity.

In one embodiment the primary flow constriction is designed, such that a throughput through the first and second exhaust treatment section is substantially equal. As a result, the exhaust gas is distributed evenly and thus an efficiency of the catalytic reaction is improved.

In one embodiment the first and second exhaust treatment section have a substantially equal throughput capacity. The throughput is defined by the size and material properties of each exhaust treatment section and the number of catalytic elements in the respective catalytic section.

In a preferred embodiment, the exhaust housing comprises a second exhaust gas treatment area. The first exhaust gas treatment area is adapted to treat a part of the exhaust gas and the second exhaust gas treatment area is adapted to treat another part of the exhaust gas. The second exhaust gas treatment area includes a third and a fourth duct. Further the second exhaust gas treatment area includes a bifurcation upstream of the third and fourth ducts for splitting the exhaust gas into a third part for the third duct and a fourth part for the fourth duct. A third and a fourth exhaust treatment section are arranged in the third and the fourth duct respectively. A secondary flow constriction is arranged in the third duct such that a flow throughput of the third and the fourth duct is optimized.

Thereby, a capacity of the exhaust manifold may be increased. In addition, second exhaust gas treatment area allows a compact construction of the catalytic sections. Further, a flow between the third and the fourth act is balanced.

In general, the third duct may be constructed similarly to the first duct. All features and particular embodiments mentioned in relation to the first duct also apply to the third duct. The same applies for the fourth and the second duct respectively.

In a preferred embodiment, first and second exhaust treatment areas are arranged symmetrically to each other. Preferably, the first and second exhaust treatment areas are plane symmetric. The first and second exhaust treatment areas may have identical capacities.

It is further suggested to provide an internal combustion engine, which comprises an exhaust manifold as described above. The engine is particularly preferred a two-stroke engine. The engine may be large vessel engine.

A large vessel engine according to this invention is an internal combustion engine whose cylinders have an inner diameter of at least 200mm. The engine preferably is a two-stroke, cross-head engine. The engine can be a diesel or a dual-fuel engine.

It is further suggested to provide a marine vessel comprising an internal combustion engine as described above.

The exhaust housing and the large vessel engine as described above may comprise at least one valve, preferably with a flap.

The valve may comprise a moveable valve body and a fixedly mounted valve seat. The valve may comprise flaps or may be a disc valve, a slide valve, a seat valve and/or a poppet valve.

The valve is preferably a passive valve that allows only one flow direction and closes and/or opens by a counter pressure. For example the valve closes due to a gravitational force on a flap and/or due to a restoring force of a spring and opens due to a pressure by the exhaust gas.

The valve preferably is arranged downstream of a SCR-reactor.

The exhaust housing and the large vessel engine may comprise a measuring device for measuring the opening degree of the valve.

For example the measuring device may detect the distance between a moveable valve body and a fixedly arranged valve seat. Preferably the measuring device comprises a sensor for measuring the angular position of at least one valve flap, for example the angular position of an exhaust gas damper.

The more the valve is open, the more gas may flow through the valve. Hence, the opening degree of the valve may be used as a measure for the volume of gas flowing through the valve.

In case the valve is a passive or at least partially passive valve, the opening degree may be used as a measure for the pressure on the valve due to the gas flow, and hence for the gas flow velocity.

In an advantageous embodiment of the system the exhaust housing and the large vessel engine comprises a control unit for determining the exhaust gas flow velocity on the basis of the opening degree of the valve, preferably of the angular position of at least one valve flap.

The control unit may comprise a rule or a map which may be stored in the storage of the control unit and by which a correlation between the measured opening degree and the gas flow velocity may be deduced.

As also the opening area of the flap may be determined from the opening degree, the volume flow can be determined. Usually an exhaust gas temperature and a pressure of the temperature are measured in a combustion engine. Thus also the density of the exhaust and the mass flow may be calculated.

The mass flow can otherwise only be determined by very expensive ultrasonic devices, or with a Prandtl pipe or an impeller, which are difficult to be used in a continuous measurement. Especially in an environment with a high particle mass flow contamination may be provoked which can only be eliminated with a great deal of maintenance effort.

Preferably the exhaust housing or the large vessel engine comprises a temperature sensor and a pressure sensor.

Preferably the exhaust housing or the large vessel engine further comprises a control unit for determining the exhaust gas mass flow on the basis of the temperature, the pressure and the opening degree, preferably the angular position of a flap.

In a preferred embodiment the exhaust housing or the large vessel engine comprises a dosing unit for a reducing agent. The exhaust housing or the large vessel engine further comprises a control unit for determining the amount of reducing agent on the basis of the opening degree, preferably the angular position.

The control unit may also determine the exhaust gas mass flow on the basis of the temperature, the pressure and the opening degree.

The dosing unit may comprise or be connected to a reservoir containing the reducing agent.

Preferably the reducing agent is injectable into an exhaust gas inlet by means of a nozzle of the dosing unit.

Depending on the opening degree of the valve, the pressure and the temperature in the exhaust gas aftertreatment system, a mass flow may be determined.

The legislation requires a certain NOₓ value measured in g/kWh downstream a SCR reactor or downstream a turbocharger which is fed by the exhaust gas aftertreatment system, in particular downstream of the funnel of the vessel. To achieve the correct amount of NOₓ, it is necessary to know the amount of NOₓ upstream of the SCR reactor and to dose the reducing agent properly.

The quantity to be dosed depends on the mass flow of the exhaust gas, the engine load and the relative content of NOₓ, measured in ppm/m³, of the exhaust gas entering the aftertreatment system. The relative NOₓ content may be measured and/or may be determined according to a model or according to an empirical map depending on the current operating conditions of the combustion engine.

The models or maps may be stored in the control unit or may be available to the control unit.

The difference between the measured NOₓ content and the limit given by legislation determines the amount of the reducing agent to be dosed.

In an advantageous embodiment the exhaust housing or the large vessel engine comprises at least one set of valve flaps, preferably at least one valve with at least one set of valve flaps. The exhaust housing or the large vessel engine may further comprise at least one sensor for measuring the angular position of at least one of the valve flaps in the set of valve flaps.

Preferably the set of valve flaps is arranged downstream of a SCR-reactor.

Advantageously the exhaust housing or the large vessel engine comprises at least one set of valve flaps, preferably being arranged downstream of the SCR-reactor, wherein the valve flaps of the set are connected to each other, preferably by a connector. Preferably the flaps are connected, such that all valve flaps have the same angular position.

The flaps perform a coupled movement, preferably all having the same opening degree at a time. Hence, the flow through all flaps is evenly distributed.

The sensor only needs to detect the opening degree of one of the flaps for determining the opening degree of the valve.

In a beneficial embodiment the exhaust housing or the large vessel engine comprises a pretensioned valve, in particular at least one valve flap wherein the valve flap is pretensioned, for example by a spring, in particular a torsional spring.

Hence, the valve is prevented from shaking or flattering due to flow turbulences and the opening degree is a trustworthy measure for the amount of the exhaust gas flowing through the exhaust housing.

The measuring device may comprise a sensor.

The sensor may detect a distance between two elements of a valve, preferably two closing elements. The sensor may also detect an opening angle of a valve closing element. The sensor may also detect a distance or an angle of a valve actuating element with respect to a fixed valve element.

The sensor may be arranged within the exhaust housing or may be arranged externally.

The valve may comprise at least one flap having a flap rotary axis, the at least one flap being arranged inside the frame. The valve may further comprise an outside element, which is connected to the shaft of the flap and which is arranged outside the housing, for example for turning the at least one flap at least partially around a flap rotary axis. The sensor may detect the position of the outside element. Hence the measuring device and/or the sensor may be arranged in a cold area, and the measurement is not disturbed by the exhaust gas.

The sensor may be an optical sensor, an acoustical sensor, a magnetic sensor or an electro-magnetic sensor.

The measuring device may comprise a video device and an evaluation unit for analysing the video signal.

The exhaust housing or the large vessel engine may comprise at least one valve flap and a sensor for measuring the momentum of the at least one valve flap. In particular a momentum caused by a spring force pretensioning the valve may be measured. The momentum is correlated to the dynamic pressure on the valve and hence to the opening degree. Hence a sensor for measuring the momentum can also be regarded as a sensor for measuring the opening degree.

The flow velocity can be deduced from a measurement of the momentum.

Preferably the at least one valve of the exhaust housing or the large vessel engine comprises at least one valve flap and the at least one valve flap closes due to gravity.

The valve flap hence does not need a powerful actuating system. The complete closure movement or at least a relevant part of the closure movement is caused by the weight of the flap.

The valve may be connected to an actuating system to provide a complete closing, especially since the exhaust gas aftertreatment system might not keep constantly a perfectly oriented position.

In an ideal position, for example when the vessel, in which the exhaust housing is installed, is in a harbour, the exhaust housing may be oriented, such that the flaps are in a completely closed position without any gas pressure and the flaps are only opened when there is an exhaust gas pressure.

However, when the vessel is on its way or when the vessel is not optimally loaded, the orientation of the housing may deviate from the optimal orientation.

In this case the direction of the restoring force may vary and the opening degree of a valve flap may not only be influenced by the pressure due to gas flow but also by the orientation of the valve with respect to gravity.

Hence in a preferred embodiment of the system the exhaust housing or the large vessel engine comprises a measuring device for determination of the spatial orientation of the valve with respect to the direction of the gravity vector.

In particular the measuring device may determine the deviation of a current orientation of a valve element which is fixedly connected to the exhaust housing or engine, for example a closing face of a valve flap, with respect to the gravity vector.

The measuring device may be a gyroscope.

For the calculation of the opening force due to a gas pressure not only the opening degree of the valve but also its position with respect to the gravity sensor should be taken into account, since the opening degree might not only be influenced by the gas.

The control unit may use the measurement values of the spatial orientation for correcting the calculation of the exhaust gas flow velocity and/or for correcting the calculation of the mass flow.

Another aspect of the invention is directed to a method of guiding exhaust gas of an internal combustion engine through an exhaust housing. The internal combustion engine is preferably an engine of a marine vessel. The method comprises the following steps:
A fuel is burned in an internal combustion chamber. The exhaust gas of the internal combustion chamber is guided into an exhaust manifold of the exhaust housing through at least one exhaust housing inlet. The exhaust gas is guided through the exhaust manifold to an exhaust treatment area of the exhaust housing.
The exhaust gas is separated into a first part and a second part in the exhaust housing, in particular in the exhaust gas treatment area. A first part of the exhaust gas is guided through a first exhaust treatment section in a first duct and a second part of the exhaust gas is guided through a second exhaust treatment section in a second duct. A flow of the first part is constricted with a flow constriction. The flow constriction is preferably located at an entry of the first duct.

According to a further aspect of the invention an exhaust housing, preferably as described above, may comprise at least two SCR-reactors.

At least one reactor inlet valve may be arranged upstream of each SCR-reactor and preferably at least one reactor outlet valve is arranged downstream of each SCR-reactor.

In a preferred embodiment at least the reactor inlet valve being arranged upstream the first SCR reactor is a first flow control valve and preferably the reactor outlet valve being arranged downstream the first SCR reactor is a second flow control valve.

The exhaust housing further may comprise a control unit, which may provide for closing the first flow control valve and preferably the second flow control valve. In particular the control unit provides for the first flow control valve and preferably the second flow control valve staying closed during a heating-up time.

The valves arranged upstream and downstream of the second SCR reactor may be passive valves, for example non-return flap valves, that may be opened when a flow pressure is applied. Hence the gas may pass only the second SCR reactor during the heating-up time.

Exhaust gas aftertreatment systems for marine applications are designed to control NOₓ emission. Depending on the location, environment zones and power of the vessel, different emission limitations need to be complied.

The performance is highly depending on temperature. However, emission legislation requires sufficient aftertreatment efficiency, even at low load, when the exhaust gas temperature regularly is on a level being critical for the SCR process.

Therefore, the time demand for heating up the aftertreatment systems, especially the SCR reactor, to a minimum operation temperature should be kept as low as possible, to get the system ready for full aftertreatment efficiency as fast as possible.

The start-up time may be shortened, when the aftertreatment system comprises more than one flow path. Thus the exhaust housing may allow selective operation of certain parts of the system and only a reduced number of SCR reactors. The exhaust gas may be controlled in a way that just a part of the total SCR volume gets passed by the exhaust gas flow. Therefore the total heat energy of the exhaust gas is heating up the used volume faster than it would be in the case of the complete volume.

The exhaust housing may comprise an exhaust manifold and at least one exhaust treatment area with at least a first and at least a second treatment section. Each of the SRC reactors may be arranged in a respective treatment section spatially separated from each other.

Each area may comprise a reactor inlet valve and preferably at least one reactor outlet valve, preferably at least one reactor outlet valve per SCR-reactor.

Each section may comprise a reactor inlet valve and preferably at least one reactor outlet valve.

Preferably the aftertreatment system comprises a temperature sensor, and more preferably a control unit which opens the first flow control valve and preferably the second flow control valve as soon as a required temperature is achieved.

Non-limiting embodiments of the invention are described, by way of example only, with respect to the accompanying drawings, in which:
- Figure 1:: shows a cross-section of an exhaust manifold according to the invention,
- Figure 2:: shows a second view of the cross-section of figure 1,
- Figure 3:: shows a third view of the cross-section of figure 1 in a second configuration, and
- Figure 4:: shows an example for a flow constriction.

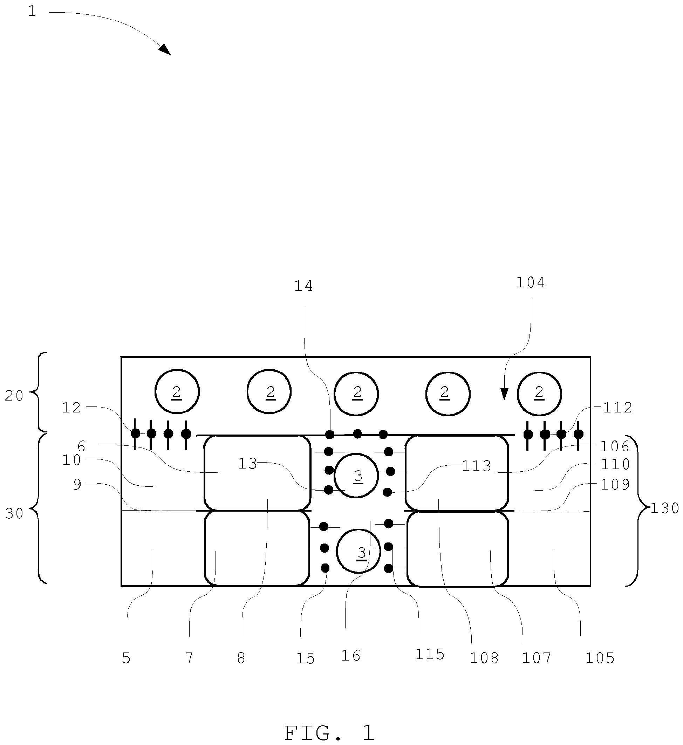

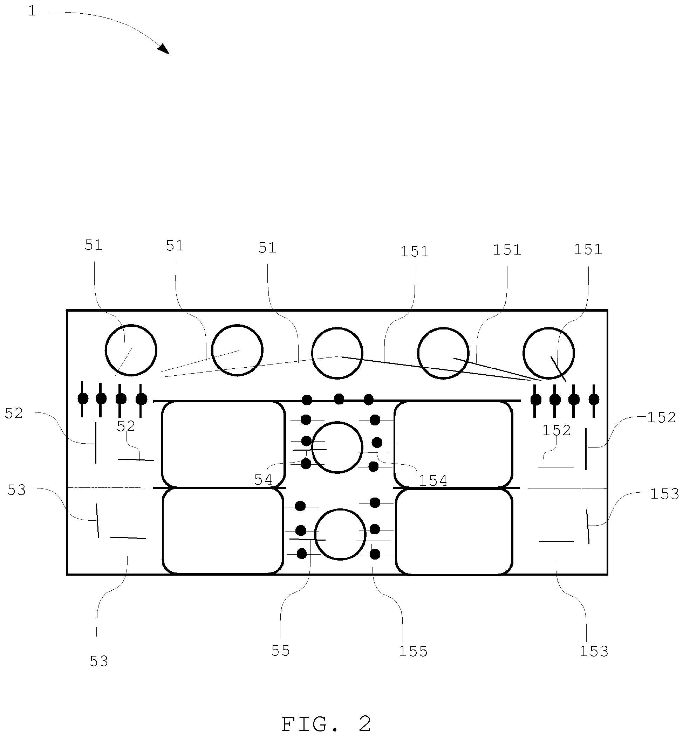

Figures 1 and 2 show a cross-section of an exhaust housing 1. In figure 1, the cross-section of the exhaust housing 1 is shown, while in figure 2 a flow of the exhaust gas is additionally indicated by arrows.

The exhaust housing 1 comprises two parts. First, the exhaust gas is received in an exhaust manifold 20. The exhaust gas is guided through the exhaust manifold 20 into an exhaust gas treatment area 30. The exhaust gas treatment area 30 comprises two exhaust housing outlets 3.

The exhaust manifold 20 collects the exhaust gases of cylinders of an internal combustion engine (not shown). The exhaust gas of each cylinder is guided through a respective pipe and into the exhaust housing 1 via an exhaust housing inlet 2. In the exhaust housing the exhaust gas is received by the exhaust manifold 20. The exhaust manifold 20 guides the exhaust gas to an outlet of the exhaust manifold 20 (see arrows 51 in figure 2). In the manifold outlet of the exhaust manifold, a manifold outlet valve 12 is arranged. In the exhaust manifold 20, the exhaust gases from the different cylinders mix and are guided to a manifold outlet valve 12. Downstream of the manifold outlet valve 12, the exhaust gas is separated at a bifurcation 10 in the exhaust gas treatment area 30 into a first duct 5 and a second duct 6. Each of the ducts 5, 6 comprises an exhaust treatment section 7, 8 realized as a catalytic section. The exhaust treatment sections 7, 8 are made up of individual catalytic elements. The first and second exhaust treatment sections 7, 8 are parallel to each other.

In such dividing exhaust treatment areas, the flow velocities between the ducts may differ. As a result, the first and the second duct have a different throughput due to the geometry of the exhaust treatment area.

The exhaust treatment sections 7, 8 each comprise catalytic elements. These catalytic elements are replaceable and identical to each other. As a result, the catalytic sections have the same capacity, while the first duct has a higher throughput. Thus, the first catalytic section, which is placed in the first duct 5, is depleted earlier.

In order to balance the flow through the exhaust treatment sections 7, 8 the exhaust housing 1 additionally comprises a primary flow constriction 9 formed as a perforated plate. The primary flow constriction 9 is positioned at an inlet of the first duct 5. The exhaust gas partially is blocked by the primary flow constriction 9 which increases the pressure at an inlet of the second duct 6. As a result, a flow velocity and a flow throughput through the second duct 6 increase. At each outlet of the ducts 5, 6, a duct outlet valve 13, 15 for each duct is arranged.

Downstream of the outlet valves 13 and 15, the cleaned exhaust gas is led into a collection chamber 16. The collection chamber 16 includes the two exhaust housing outlets 3, through which the exhaust gas exits the exhaust housing 1.

Further, the exhaust housing 1 includes a bypass valve 14. The bypass valve 14 connects the exhaust manifold 20 directly to the collection chamber 16 and the exhaust housing outlets 3. In the shown configuration in figure 1, the bypass valve 14 is closed. In this configuration, the exhaust gas is guided either through the first exhaust gas treatment area 30 or through the second exhaust gas treatment area 130. The second exhaust gas treatment area 130is designed similarly to the first exhaust gas treatment area 30.

The exhaust manifold 20 guides the exhaust gas from the exhaust housing inlets 2 through a second manifold outlet valve 112 to second exhaust gas treatment area 130. The second exhaust gas treatment area 130 includes a third duct 105 and a fourth duct 106. The exhaust gas stream through the second exhaust gas treatment area 130 is split up by a bifurcation 110 into the third and fourth ducts 105, 106. A third exhaust treatment section 107 realized as a catalytic section is arranged in the third duct 105. While in the fourth duct 106 a fourth exhaust treatment section 108 realized as a catalytic section is arranged. In principle, the second exhaust gas treatment area 130 is a mirrored version of the first exhaust gas treatment area 30.

Similarly to the first duct 5, the third duct 105 includes a flow constriction 109 located in the inlet of the third duct 105. The flow constriction 109 is realized as a perforated plate and optimizes the flow throughput through the third and fourth duct such that the flow through both is substantially equal.

The first exhaust gas treatment area 30 and the second exhaust gas treatment area 130 are shown as each comprising two exhaust treatment sections 7, 8, 107, 108 realized as catalytic sections. The first and/or the second exhaust treatment areas may also comprise more than two treatment areas. For example, the first treatment area could comprise three, four, or more separate ducts wherein each duct comprises at least one treatment area.

Both, the third duct 105 and the fourth duct 106 include a duct outlet valve 113, 115. The duct outlet valves 13, 15, 113 and 115 can be closed to seal off one of the ducts 3, 5, 105, 106 individually. This may be particularly advantageous, in case one of the catalytic sections is depleted or faulty. Another advantage is that this may allow a more efficient operational mode for the catalytic section(s), in particular at low loads or when the engine is starting. The engine can include a controller (not shown) configured to control the outlet valves.

When the second manifold outlet valve 112 is closed, the third and fourth duct 105, 106 (i.e. the second exhaust treatment area) are deactivated. At low engine loads, only the first and second catalytic sections may be needed.

Similarly, to the second manifold outlet valve 112, the first outlet valve may be closed. By closing the first manifold outlet valve 12, the first duct 5 and the second duct 6 may be closed, in particular at low engine loads.

A flow of the exhaust gas is highlighted by figure 2. As described above, the exhaust gas enters the exhaust housing 1 through the exhaust housing inlets 2. As highlighted by arrows 51, the exhaust gas then flows towards the manifold outlet valve 12 and after the manifold outlet valve 12, as shown by arrows 52, into the first duct 5. A part of the exhaust gas flows from into the second duct 6 as shown by arrows 53. Arrows 54 and 55 show how the exhaust gas leaves the catalytic sections and exits the exhaust housing 1 through the exhaust housing outlets 3.

As can be seen from figure 2, a flow path of the exhaust gas through the second exhaust gas treatment area 130 and the corresponding third and fourth ducts corresponds to the flow path through the first exhaust treatment area 30. As highlighted by arrows 151, the exhaust gas then flows towards the second manifold outlet valve 112 and after the second manifold outlet valve 112, as shown by arrows 152, into the third duct 105. A part of the exhaust gas flows from into the fourth duct 106 as shown by arrows 153. Arrows 154 and 155 show how the exhaust gas leaves the catalytic sections and exits the exhaust housing 1 through the exhaust housing outlets 3.

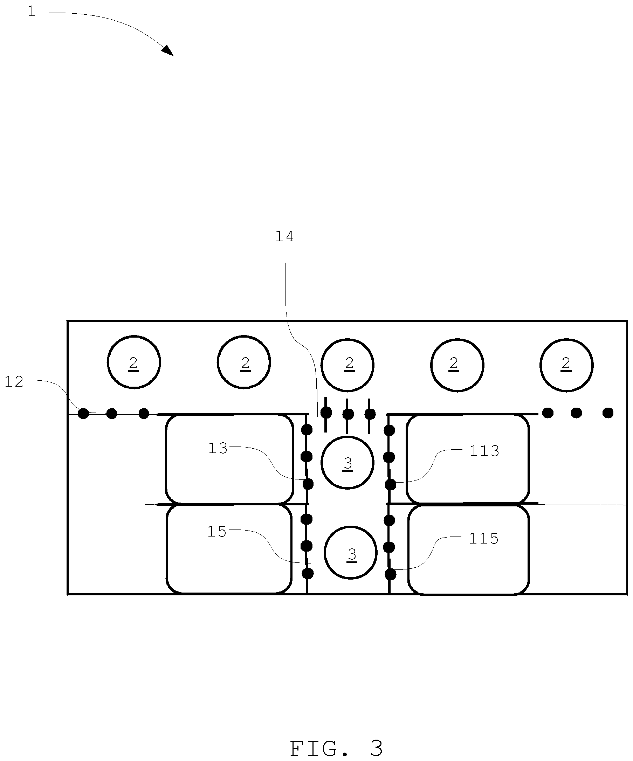

Figure 3 shows the exhaust housing 1 of figures 1 and 2 in a second configuration. In the configuration shown in figure 3, the manifold outlet valves 12 and 112 are closed. The bypass valve 14 is opened. In this configuration, the exhaust gas is directly guided from the exhaust housing inlets 2 through the bypass valve 14 and into the outlet chamber with the exhaust housing outlets 3. In this mode, the exhaust gas is not guided through the catalytic sections. Thereby, the exhaust gas carries a higher amount of energy which can be used for example in the turbocharger. On the other hand, emissions by the internal combustion engine may be higher.

As can be seen in figure 3, the manifold outlet valves 12 and 112 are closed to prevent any exhaust gas into the first or second duct. Further, the duct outlet valves 13, 15, 113, 115 are closed. This prevents a backflow from the collection chamber 16 into the catalytic sections.

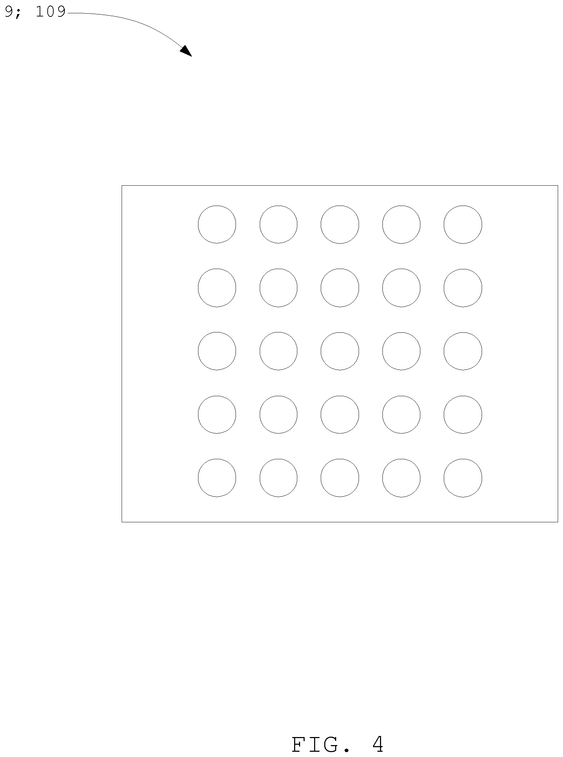

Figure 4 shows an embodiment of the flow constriction. The primary flow constriction 9 and/or secondary flow constriction 109 include circular perforations. The circular perforations are evenly distributed in a rectangular pattern.

## Claims

1. Exhaust housing (1) for an internal combustion engine with at least one exhaust housing inlet (2) for an exhaust gas of the internal combustion engine and at least one exhaust housing outlet (3) for the exhaust gas, the exhaust housing (1) comprising:
- an exhaust manifold (20) and a first exhaust gas treatment area (30),
- the exhaust manifold (20) including the at least one exhaust housing inlet (2) and at least one manifold outlet for guiding the exhaust gas to the first exhaust gas treatment area (30),
- the first exhaust gas treatment area (30) comprising a first duct (5) and a second duct (6), wherein a first exhaust treatment section (7) is arranged in the first duct (5) and a second exhaust treatment section (8) is arranged in the second duct (6),
- wherein the first exhaust gas treatment area (30) further comprises a bifurcation (10) upstream of the first duct (5) and the second duct (6) for splitting the exhaust gas into a first part for the first duct (5) and a second part for the second duct (6)
**characterized in that** the first duct (5) comprises a primary flow constriction (9), such that a flow distribution between the first and second ducts (5, 6) is optimized.

2. Exhaust housing (1) according to claim 1, wherein the flow constriction (9) is formed by at least one of: a baffle plate, a perforated plate, a valve, one or more flaps and a constriction of a cross-section in the first duct.

3. Exhaust housing (1) according to claim 1 or 2, wherein the flow constriction (9) is variable, preferably a variable perforated plate.

4. Exhaust housing (1) according to one of the preceding claims, wherein the flow constriction (9) is designed such that turbulences are introduced.

5. Exhaust housing (1) according to one of the preceding claims, wherein the primary flow constriction (9) is a perforated plate, which is arranged perpendicular to an intended flow direction.

6. Exhaust housing (1) according to one of the preceding claims, wherein the primary flow constriction (9) is designed such that a flow through the first and second exhaust treatment section is substantially equal.

7. Exhaust housing (1) according to one of the preceding claims, wherein the first and second exhaust treatment sections (5, 6) have a substantially equal throughput capacity.

8. Exhaust housing (1) according to one of the preceding claims, wherein at least one exhaust treatment section (5, 6), preferably all exhaust treatment sections (5, 105, 6, 106), comprises one, two or more catalytic elements.

9. Exhaust housing (1) according to one of the preceding claims, wherein the housing (1) comprises a second exhaust gas treatment area (130), wherein first exhaust gas treatment area (30) is adapted to treat a part of the exhaust gas and the second exhaust gas treatment area (130) is adapted to treat another part of the exhaust gas, and wherein the second exhaust gas treatment area (130) includes:
- a third and a fourth duct (105, 106),
- a bifurcation (110) upstream of the third and fourth ducts (105, 106) for splitting the exhaust gas into a third part for the third duct (105) and a fourth part for the fourth duct (106)
- a third and fourth exhaust treatment section (107, 108) arranged in the third and the fourth duct respectively,
- wherein a secondary flow constriction (109) is arranged in the third duct (105) such that a flow throughput of the third and the fourth duct (105, 106) is optimized.

10. Exhaust housing (1) according to claim 9, wherein the first and second exhaust gas treatment areas (30, 130) are arranged symmetrically to each other, preferably plane symmetrically.

11. Internal combustion engine, preferably a large vessel engine, comprising an exhaust manifold (20) according to one of the preceding claims.

12. Method of guiding exhaust gas of an internal combustion engine, preferably of a marine vessel, through an exhaust housing (1) comprising the steps of:
- Burning a fuel in an internal combustion chamber
- Guiding the exhaust gas of the internal combustion chamber into an exhaust manifold (20) of the exhaust housing (1) through at least one exhaust housing inlet (2) to an exhaust gas treatment area (30) of the exhaust housing (1)
- Separating the exhaust gas into a first part and a second part in the exhaust housing, in particular in the exhaust gas treatment area (30)
- Guiding the first part of the exhaust gas through a first exhaust treatment section (7) in a first duct (5)
- Guiding the second part of the exhaust gas through a second exhaust treatment section (8) in a second duct (6),
- Constricting a flow of the first part with a flow constriction (9), preferably at an entry of the first duct (5) .
